(19) Europäisches Patentamt

European Patent Office

Office européen des brevets

(11) **EP 0 459 764 B1**

(12) **EUROPEAN PATENT SPECIFICATION**

(45) Date of publication and mention
of the grant of the patent:
**11.12.1996 Bulletin 1996/50**

(51) Int Cl.6: **G11B 7/09**, G11B 7/135,
G11B 7/12

(21) Application number: **91304820.3**

(22) Date of filing: **29.05.1991**

(54) **Optical head device**

Anordnung eines optischen Kopfes

Dispositif à tête optique

(84) Designated Contracting States:
**DE FR GB IT NL**

(30) Priority: **29.05.1990 JP 138893/90**

(43) Date of publication of application:
**04.12.1991 Bulletin 1991/49**

(73) Proprietor: **SHARP KABUSHIKI KAISHA**
**Osaka 545 (JP)**

(72) Inventors:
• **Miyake, Takahiro**
**Tenri-shi, Nara-ken (JP)**
• **Yoshida, Yoshio**
**Tenri-shi, Nara-ken (JP)**

• **Kurata, Yukio**
**Tenri-shi, Nara-ken (JP)**

(74) Representative: **Brown, Kenneth Richard et al**
**R.G.C. Jenkins & Co.**
**26 Caxton Street**
**London SW1H 0RJ (GB)**

(56) References cited:
**EP-A- 0 305 169**     **EP-A- 0 338 840**
**EP-A- 0 453 323**     **EP-A- 0 457 573**
**US-A- 4 333 173**

• **PATENT ABSTRACTS OF JAPAN vol. 014, no.
050 (P-0998) 30 January 1990, & JP-A- 01 279433**

## Description

FIELD OF THE INVENTION

The present invention relates to an optical head device to be provided in optical recording-reproduction apparatuses for recording/reproducing information on or from a recording medium such as an optical disk.

BACKGROUND OF THE INVENTION

Optical head devices are well known to the art, which record and reproduce information by applying a light beam to a recording medium such as an optical disk. In a commonly used optical head device, a light beam emitted from a semiconductor laser as a light source passes through a diffracting element, and forms a parallel beam of light through a collimating lens. An intensity distribution of the parallel beam of light shows an elliptic shape in its cross section orthogonal to the optical axis, according to the intensity distribution of the light beam emitted from the semiconductor laser. Here, such an intensity distribution of light related to a cross section orthogonal to the optical axis, is hereinafter referred to simply as a cross-sectional intensity distribution. The elliptic cross-sectional intensity distribution is shaped into a substantially circular shape by a shaping prism in order to improve the efficiency of light utilization in the optical head device. The light beam having its cross-sectional intensity distribution shaped into the substantially circular shape, is converged on the recording medium by an object lens.

The light beam reflected from the recording medium (hereinafter referred to simply as a reflected beam) follows a light path in the reverse order to the above-mentioned, and has its cross-sectional intensity distribution restored to be an elliptic shape by the shaping prism. Thereafter, the reflected beam is directed to a diffracting element via the collimating lens, and diffracted by the diffracting element so as to be converged on a photodetector.

Normally, each of the diffracting element and the photodetector is divided into a plurality of regions by a plurality of division lines so as to obtain a focus error signal or a tracking error signal by adopting the knife-edge method or push-pull method. For example, in accordance with the knife-edge method, a focus error signal can be obtained by finding a difference of detecting signals released from two detecting regions adjacent to each other in the photodetector.

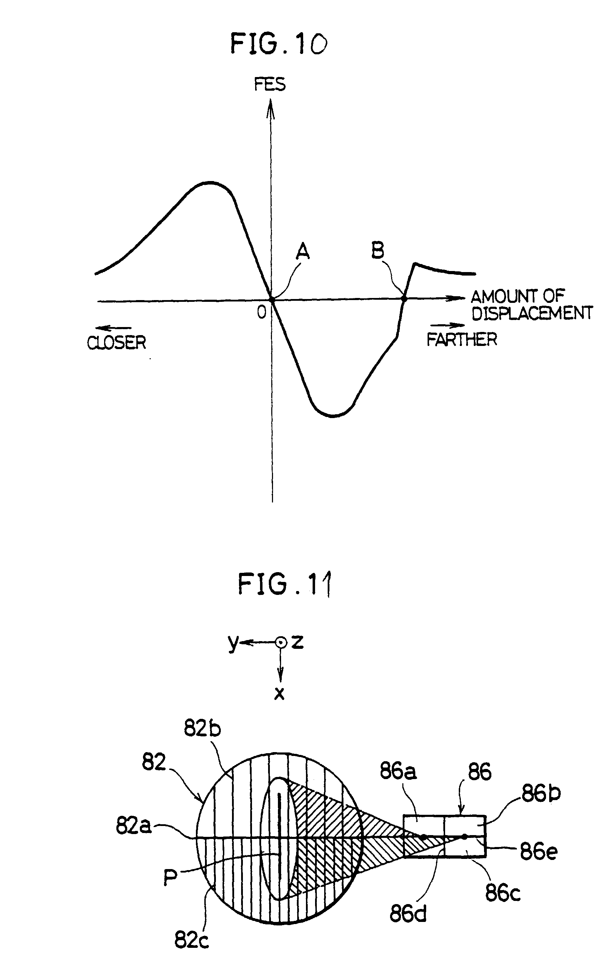

Fig. 10 shows one example of the FES (Focus Error Signal) curve showing the relationship between the intensity of the focus error signal thus obtained and the amount of the displacement of the optical disk based on the focal point of the object lens taken as a reference. In Fig. 10, a reference point A represents a case without a focus error. The reflected beam hits the diffracting element, and a converging point of the resulting beam diffracted toward the photodetector by the diffracting element varies in its position in front of or behind the photodetector in response to fluctuations of the recording medium from the position causing no focus error. As a result, since a shape of a light spot formed on the photodetector by the diffracted beam is reversed, the value of the focus error signal is reversed from positive to negative in accordance with the amount of the displacement of the recording medium.

In this case, as shown in Fig. 10, when the recording medium moves away from the focal point of the object lens to a certain extent, an undesired zero-cross point B appears on the FES curve at a position other than the reference point A. Especially in an optical pickup device using a shaping prism in its optical system, an undesired zero-cross point may appear within a dynamic range of focusing control, depending on what arrangement is selected with respect to the optical system. This is related to the fact that the fluctuation of the recording medium causes the shaping prism to have astigmatism.

Meanwhile, the zero-cross point in the FES curve provides a drive target for the object lens in focus servo control, and if a zero-cross point B appears at a position other than the reference point A as described above, the following problems arise. When focusing control is performed so as to move the object lens from a farther position toward a closer position with respect to the optical disk, for example, in the case of occurrence of an excessive focus error due to an external cause or an initial state of the device, the object lens might be moved to focus on the incorrect drive target derived from the undesired zero-cross point B. As a result, normal information recording or reproduction might not be performed.

In order to solve the above problems, the inventors of the present invention have devised an optical head device shown in Fig. 7 and disclosed in EP-0453323, relevant under Art.54(3) EPC. The optical head device is provided with a laser light source 81 which emits in the shape of a cone a light beam whose cross-sectional intensity distribution has an elliptic shape. The light beam passes through a diffracting element 82, and is directed to the collimating lens 83. The light beam formed into a parallel beam of light by a collimating lens 83 is directed to a shaping prism 84. The shaping prism 84 shapes the parallel beam of light in its cross-sectional intensity distribution from the elliptic shape into a round shape. Through an object lens 85, the light beam having been subject to the shaping process is converged onto a belt-like track 71 formed on an optical disk 70.

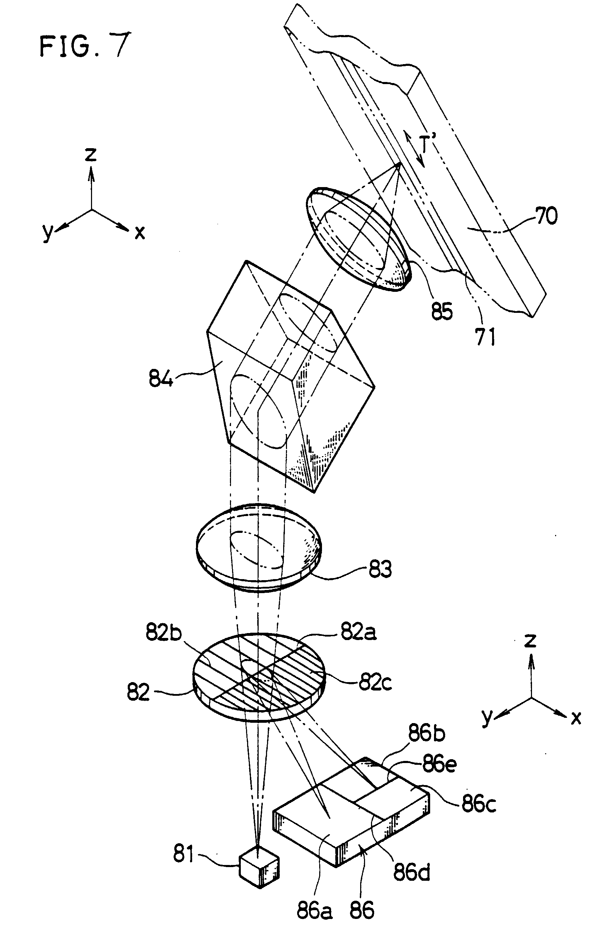

In Fig. 7, an arrow T' represents a microscopic rotation direction of the optical disk 70 at a converging point of the light beam converged thereon through the object lens 85. The object lens 85 is permitted to move closer to or farther from the optical disk 70 so as to always position the focal point of the object lens 85 just on the track 71 (this state is referred to as a just-in-focus state). Further, the object lens 85 is moved in a radial direction of the optical disk 70. The radial direction is orthogonal to the rotation direction indicated by the arrow T'. The light beam reflected from the optical disk 70 (hereinafter referred to simply as a reflected beam) returns to the disc-shaped diffracting element 82 following the path to the optical disk 70 in the reverse order.

The following description will discuss in detail an arrangement of optical members employed in the above optical head device. For example, a z-axis is determined to be parallel to an optical axis of a light beam emitted from a laser light source 81. Optical axes of the diffracting element 82 and collimating lens 83 coincide with the optical axis of the light beam emitted from the laser light source 81. The diffracting element 82 is divided equally into two diffracting regions by a division line 82a. The diffracting regions are respectively provided with a first diffraction grating 82b and a second diffraction grating 82c for diffracting the reflected beam. A y-axis is determined to be parallel to the division line 82a, while an x-axis is set to be orthogonal to both the x and z-axes. Then, the laser light source 81 is arranged such that the elliptic cross-sectional intensity distribution of the light beam emitted from the laser light source 81 has its major axis set to be parallel to the x-axis. In other words, concerning the elliptic bright portion formed on the diffracting element 82 by the light beam emitted from the laser light source 81 or by the reflected beam from the optical disk 70, the major axis of the bright portion is parallel to the x-axis, and orthogonal to the division line 82a. Further, the minor axis of the bright portion is parallel to the y-axis, and substantially coincides with the division line 82a. Additionally, directions indicated by respective arrows of the x, y and z-axes are supposed to be the positive directions.

Grating lines of each of diffraction gratings 82b and 82c are substantially parallel to the x-axis and disposed with a predetermined spacing. Thus, parts of the reflected beam directed to the respective diffraction gratings 82b and 82c are diffracted in directions different from the direction toward the laser light source 81 and substantially parallel to the y-z plane containing the division line 82a. Here, the grating pitch of the first diffraction grating 82b is greater than that of the second diffraction grating 82c. That is, the second diffraction grating 82c has its grating lines more closely pitched than those of the first diffraction grating 82b, thereby making an diffraction angle of the light beam diffracted by the second diffraction grating 82c greater than that of the light beam diffracted by the first diffraction grating 82b.

A photodetector 86 is disposed alongside of the laser light source 81 in the negative direction of the y-axis. Portions of the reflected beam are diffracted by the diffraction gratings 82b and 82c toward the photodetector 86, and converged on a detecting face of the photodetector 86. The detecting face of the photodetector 86 is divided equally into two detecting regions by a first division line 86d extending in parallel with the x-axis. One of the detecting regions closer to the laser light source 81 is referred to as a first detecting region 86a. The other detecting region is divided equally into a second detecting region 86b and a third detecting region 86c by a second division line 86e extending along the y-axis.

In the above arrangement, the reflected beam derived from a light beam having a reference wave-length, converged on the optical disk 70 in the just-in-focus state, is divided equally into two beams by the respective diffraction gratings 82b and 82c of the diffracting element 82, and the two beams are diffracted at respective angles different from each other. One of the beams diffracted by the first diffraction grating 82b has a smaller diffraction angle, and is converged on a center of the first detecting region 86a. On the other hand, the other beam diffracted by the second diffraction grating 82c has a greater diffraction angle, and is converged on a center of the second division line 86e. The photodetector 86 respectively releases detection signals depending on intensities of the respective light beams converged on the detecting regions 86a, 86b and 86c.

The detection signals of the first, second and third detecting regions 86a, 86b and 86c are respectively denoted by Sa, Sb and Sc. Then, a focus error signal FES for use in focusing control of the light beam to be projected on the optical disk 70 is obtained by the difference of the detection signals of the second and third detecting regions 86b and 86c, that is, Sb - Sc. The object lens 85 is moved closer to or farther from the optical disk 70 so as to make the value of the focus error signal FES equal to "0". Thus, the light beam is projected on the optical disk 70 in the just-in-focus state.

Further, a radial error signal RES for use in tracking control of the light beam to be projected on the optical disk 70 is obtained by an equation; Sa - (Sb + Sc). The object lens 85 is moved in a radial direction of the optical disk 70 so as to make the value of the radial error signal RES equal to "0".

The optical head device which is arranged so that the minor axis of an elliptic bright portion formed on the diffracting element 82 by the reflected beam may coincide with the division line 82a, as described above, has the following advantages. As illustrated in Fig. 11, for example, in the case where the optical disk 70 is fluctuated to move away from a focal point of the object lens 85, there is formed a line-like bright portion on the diffracting element 82 due to the astigmatism of the shaping prism 84 (shown by a heavy line P in Fig. 11). The line-like bright portion P may be formed overlapping on the division line 82a depending on the alignment of optical members constituting the optical head device, or it may be formed being biased onto the first diffraction grating 82b due to an installation error of the diffracting element 82 or other reasons. In this case, outputs of the detecting regions 86b and 86c become "0". As a result, since the value of the focus error signal FES shows "0" in spite of the presence of a focus error, an offset occurs in focusing control. However, with the advantageous arrangement that the line-like bright portion P is formed so as to be orthogonal to the division line 82a, even if the division line 82a slightly tilts with respect to the x-axis, or slightly deviates from the optical axis, those factors have little adverse effects on the requirement that the bright portion P should be evenly allotted onto the regions 82b and 82c. Therefore, an appropriate focus error signal FES can be obtained.

Furthermore, it is avoidable to have the phenomenon that a semi-elliptic light spot is first formed either on the detecting regions 86b or on 86c, and then formed on the other region in an inverted shape as the optical disk 70 further moves away from the focal point of the object lens 85. (The value of the focus error signal FES undesirably shows "0" also in the case where a light spot first formed either on the detecting region 86b or 86c is then reversed in its position onto the other detecting region 86b or 86c). As described above, in the optical head device shown in Fig. 7, its focusing control is little adversely affected by fluctuations of the optical disk 70.

However, such a laser light source 81 employed in the above-mentioned optical head device, for example, a semiconductor laser, has a property that a wave-length of its projecting light beam varies depending on ambient temperature changes. Further, a diffraction angle of a light beam diffracted by a diffraction grating varies depending on its wave-length. In other words, the diffraction angle becomes greater as the wave-length of the light beam becomes longer.

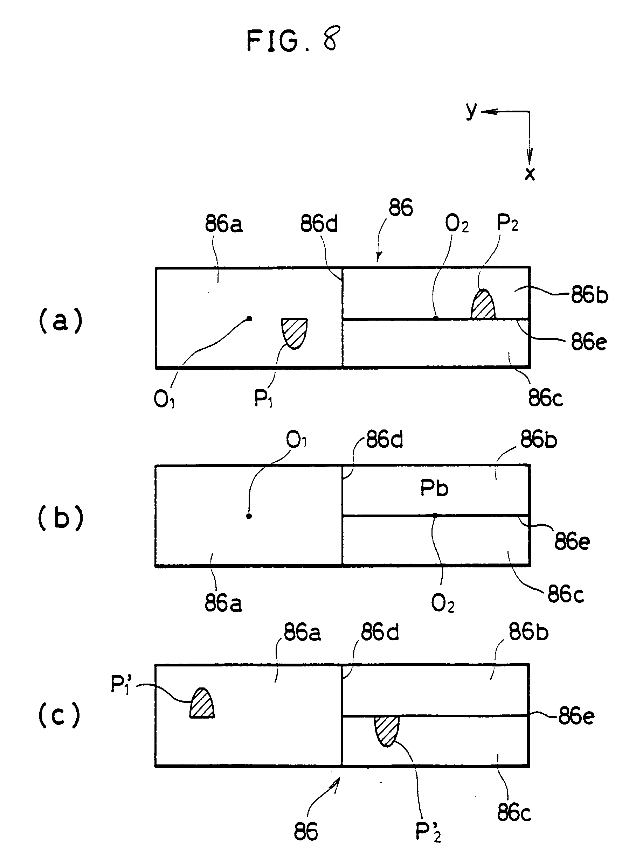

For example, as shown in Fig. 8(b), when a light beam with a reference wave-length $\lambda_0$ emitted from the laser light source 81 is converged on the optical disk 70 in the just-in-focus state and reflected therefrom, a part of the resulting reflected beam directed to the first diffraction grating 82b is diffracted to be converged onto a center $O_1$ of the first detecting region 86a of the photodetector 86 to form a light spot. On the other hand, another part of the reflected beam directed to the second diffraction grating 82c is diffracted to be converged onto a center $O_2$ of the second division line 86e of the photodetector 86 to form a light spot. In this case, the value of the focus error signal FES becomes "0".

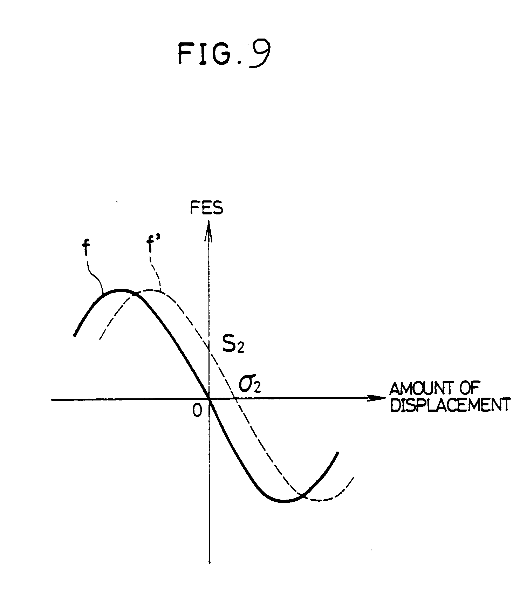

Meanwhile, in the case where the optical disk 70 is fluctuated with respect to the object lens 85 and a light beam projected on the optical disk 70 is not in the just-in-focus state, the focus error signal FES has an intensity responsive to an amount of displacement of the optical disk 70 from a focal point of the object lens 85 as a reference as shown by a solid line f in Fig. 9.

Here, suppose that ambient temperature has risen with respect to the laser light source 81, a wave-length $\lambda$ of a light beam emitted from the laser light source 81 becomes longer than the reference wave-length $\lambda_0$. In this case, even if the light beam is projected on the optical disk 70 in the just-in-focus state, the resulting reflected beam reflected from the optical disk 70 and directed to the diffracting element 82 is diffracted with a greater angle than that of the reflected beam having the reference wave-length $\lambda_0$ as described earlier. For this reason, parts of the reflected beams with the wave-

length $\lambda$, after having been diffracted by the respective diffraction gratings 82b and 82c, are focused in front of the detecting regions of the photodetector 86 before reaching them. As a result, as shown in Fig. 8(a), one of the beams diffracted by the first diffraction grating 82b is projected on the first detecting region 86a to form a semi-elliptic bright portion $P_1$ lying in the positive direction of the x-axis. On the other hand, the other beam diffracted by the second diffraction grating 82c is projected on the second detecting region 86b to form a semi-elliptic bright portion $P_2$ lying in the negative direction of the x-axis. The bright portions $P_1$ and $P_2$ are respectively positioned away from the center $O_1$ of the first detecting region 86a and the center $O_2$ of the second division line 86e in the departing direction from the laser light source 81. Further, as described earlier, the bright portions $P_1$ and $P_2$ are opposite to each other in their shapes with their respective major axes being parallel to the first division line 86d, that is, the x-axis.

Next, suppose that ambient temperature has dropped with respect to the laser light source 81, a wave-length $\lambda'$ of a light beam emitted from the laser light source 81 becomes shorter than the reference wave-length $\lambda_0$. In this case, the beams diffracted by the respective diffraction gratings 82b and 82c have smaller diffraction angles. For this reason, the beams with the wave-length $\lambda'$, after having been diffracted by the respective diffraction gratings 82b and 82c, are focused behind the detecting regions of the photodetector 86. As a result, as shown in Fig. 8(c), one of the beams diffracted by the first diffraction grating 82b is projected on the first detecting region 86a to form a semi-elliptic bright portion $P_1'$ lying in the negative direction of the x-axis. The shape of the bright portion $P_1'$ has an opposite orientation to that of the bright portion $P_1$. On the other hand, the other beam diffracted by the second diffraction grating 82c is projected on the second detecting region 86c to form a semi-elliptic bright portion $P_2'$ lying in the positive direction of the x-axis. Similarly, the shape of the bright portion $P_2'$ has an opposite orientation to that of the bright portion $P_2$. The bright portions $P_1$ and $P_2$ are respectively positioned away from the center $O_1$ of the first detecting region 86a and the center $O_2$ of the second division line 86e in the approaching direction to the laser light source 81.

As described earlier, the cross-sectional intensity distribution of the reflected beam directed to the diffracting element 82 shows an elliptic shape whose major axis is orthogonal to the division line 82a, that is, the y-axis, and further is equally allotted to the diffraction gratings 82b and 82c. Therefore, the reflected beam with the wave-length $\lambda$ or $\lambda'$ having a variation from the reference wave-length $\lambda_0$ is diffracted by the diffracting element 82 to form on the respective detecting regions of the photodetector 86 the bright portions $P_1$ and $P_2$ or $P_1'$ and $P_2'$ which show elliptic shapes with their respective major axes orthogonal to the y-axis.

Thus, for example, in the case where the wave-

length $\lambda$ of a light beam is greater than the reference wave-length $\lambda_0$, even if the light beam is projected on the optical disk 70 in the just-in-focus state, the second detecting region 86b releases the detection signal Sb based on the intensity of the bright portion $P_2$ shown in Fig. 8(a). As a result, despite the fact that the optical disk 70 is situated at an appropriate position with respect to the object lens 85, a focus error signal FES (= Sb - Sc) having a value of $S_2(> 0)$ is produced as is shown by a broken line f' in Fig. 9. The focus error signal FES having a positive value indicates that the optical disk 70 is fluctuated to approach the object lens 85. Therefore, in order to make the value of the focus error signal FES set to "0", the object lens 85 is moved so that the optical disk 70 may be located away from the focal point of the object lens 85 by an offset value $\sigma_2$. This causes the light beam to be focused before reaching the optical disk 70, thereby disturbing an accurate recording or reproducing operation for information.

EP-A-0453323 also discloses an optical head device in which the major axis of the elliptical cross-section of the beam emitted by the laser light source, and the major axis of the elliptical light portion formed on the diffracting element by the reflected light beam are parallel to the division line dividing the diffraction face of the diffracting element. Nevertheless in this device, the beam shaping prism condenses the beam in relation to the major axis of the elliptical-shaped beam contrary to the present invention in which the beam is diffused in relation to the minor axis.

EP-A-0 457 573, also relevant under Art. 54(3) EPC, discloses another optical head device. A diffracting element which directs reflected light from the recording medium towards a light receiving element has two tracking diffracting regions separated by a division line extending in a direction corresponding to a track direction of a recording medium, and one focusing diffracting region separated from the tracking diffracting regions by a division line extending in a direction corresponding to a radial direction of the recording medium.

EP-A-0 338 840 discloses an optical pickup device in which a diffracting element in the light path between a lith source and a recording medium is divided into two sub-regions. The first causes diffraction in the track direction to form three spots on the medium spaced along the track. The other sub-region causes diffraction perpendicular to the track direction to deflect the reflected beams of the three spots onto respective portions of a photodetector. JP-A-1279433 discloses another optical pickup in which beam shaping and beam separation are implemented by a single diffracting rating.

SUMMARY OF THE INVENTION

It is an aim of the present invention to provide an optical head device wherein offsets in focusing control due to wave-length variation of light to be converged on a recording medium can be suppressed and response sensitivity in focusing control can be improved.

According to the present invention there is provided an optical head device comprising:

a light generation means for generating a light beam having a substantially elliptical intensity distribution in cross section orthogonal to the beam's optical axis, the major axis of the elliptic shape being parallel to a reference direction;

photodetecting means for generating detection signals so as to enable the derivation of a focus error signal, the photodetecting means including a plurality of photodetecting sections formed by a plurality of division lines dividing a light-receiving face thereof, the detection signals being released by respective said photodetecting sections according to the intensity of the light received thereby, at least one of the plurality of division lines being substantially parallel to the reference direction;

diffraction means having a diffraction face divided into two diffracting regions by a single division line which extends parallel to the reference direction; and

optical means for converging the light emitted from the light generation means on a recording track formed on a recording medium and further directing reflected light from the recording track to the diffraction means so that the major axis of an elliptic bright portion formed on the diffracting face by the reflected light may be positioned on said division line of the diffraction means, said optical means including intensity distribution shaping means for shaping an intensity distribution of the light to be directed on the recording track into a substantially circular shape by diffusing the elliptic intensity distribution of the light emitted by the light generation means with respect to the minor axis, and permitting the intensity distribution of the light reflected from the recording track to restore its substantially elliptic shape by a reversed function to the above diffusing function, whereby a value of the focus error signal derived from the detection signals released by two photodetecting sections separated by said one of the division lines which is substantially parallel to the reference directions is allowed to become zero so as to indicate an in-focus state of said converged light beam on said recording medium when a part of the reflecting light that has been diffracted by one of the two diffracting regions of the diffraction means is converged on said one of the division lines of the photodetecting means.

In the above arrangement, the light generation means projects light whose intensity distribution has an elliptic shape with its major axis parallel to the reference direction, and the division line of the diffraction means is set to be parallel to the reference direction. Thus, the reflected light directed to the diffraction means forms an elliptic bright portion whose major axis is situated on the division line of the diffraction means. Provided that there is no focus error and further there is no wave-length variation with respect to light generated by the light generation means, the diffraction means diffracts reflected light that has directed to one of the diffracting regions so that the reflected light may be converged on the division line in the photodetecting means which is substantially parallel to the reference direction. At this time, the value of the focus error signal obtained based on detection signals released by the respective photodetecting sections is permitted to become "0".

On the other hand, occurrence of a wave-length variation in the light generated by the light generation means causes a variation in the diffraction angle of the reflected light directed to the diffraction means. This causes the position of a converging point, which was on the light-receiving face of the photodetecting means in the case where there is no focus error and further there is no wave-length variation with respect to the light generated by the light generation means, to vary in a direction orthogonal to and parallel to the light-receiving face. As a result, in the vicinity of the division line which is substantially parallel to the reference direction in the photodetecting means, is formed a thin semi-elliptic bright portion whose major axis of the elliptic shape is parallel to the division line. In other words, even in the case of no focus error, if there is a wave-length variation, the value of the focus error signal does not become "0" due to the thin semi-elliptic bright portion formed in the photodetecting means.

However, an offset value of the focus error signal caused by the wave-length variation is extremely suppressed because of the facts that detection sensitivity is low in the vicinity of the division lines in the photodetecting means; and the bright portion formed on the photodetecting means lies in a thin shape along the division line.

Moreover, the bright portion formed on the diffracting face of the diffraction means, derived from the reflected light, has an elliptic shape whose minor axis is orthogonal to the reference direction. The effect of the intensity distribution shaping means which diffuses the elliptic intensity distribution of the light emitted by the light generation means in the minor axis direction of the elliptic shape, is to cause the shape of the bright portion formed on the diffracting face to change depending on changes in amount of focus error. A rate of change in the minor axis direction becomes greater than that in the major axis direction. With this arrangement, in conjunction with the shape of the bright portion formed on the photodetecting means, a rate of change in the minor axis direction becomes greater than that in the major axis direction, resulting in abrupt changes in the focus error signal. Therefore, response sensitivity in the focusing control can be improved.

Embodiments of the invention will now be described by way of example with reference to the accompanying drawings.

## BRIEF DESCRIPTION OF THE DRAWINGS

Fig. 1 is a perspective view showing a structural example of an optical head device according to the present invention.

Fig. 2 is a side view of the optical head device shown in Fig. 1.

Fig. 3 is a plan view showing shapes of bright portions formed on a photodetector caused by a fluctuation of an optical disk.

Fig. 4 is an explanatory drawing showing an optical function of a shaping prism.

Fig. 5 is a graph showing the relationship between the amount of displacement of the optical disk, shown in Fig. 1, based on a focal point of an object lens as a reference and the variation of intensity of a focus error signal FES.

Fig. 6 is a plan view showing shapes of bright portions formed in the photodetector caused by a wave-length variation of a light beam.

Fig. 7 is a perspective view showing a structural example of an optical head device.

Fig. 8 is a plan view showing shapes of bright portions formed in the photodetector caused by a wave-length variation of a light beam in conjunction with the optical head device of Fig. 7.

Fig. 9 is a graph showing the relationship between the amount of displacement of the optical disk, shown in Fig. 7, based on a focal point of an object lens as a reference and the variation of intensity of a focus error signal FES.

Fig. 10 is a graph showing an example of the FES curve containing an undesired zero-cross point.

Fig. 11 is a schematic plan view of a diffracting element and the photodetector shown in Fig. 7.

Fig. 12 is a side view of an optical head device as one structural example, which is capable of obtaining a desirable tracking error signal.

Fig. 13 is a plan view showing a second diffracting element in the optical head device of Fig. 12.

Fig. 14 is a plan view showing a photodetector in the optical head device of Fig. 12.

## DESCRIPTION OF THE EMBODIMENT

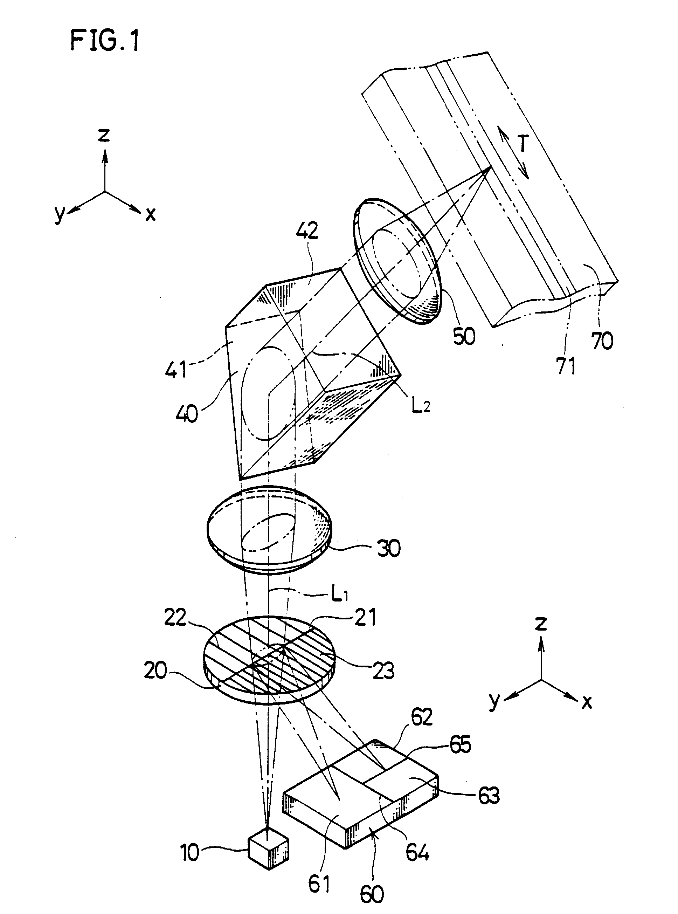

Referring to Figs. 1 to 6, the following description will discuss one embodiment of the present invention.

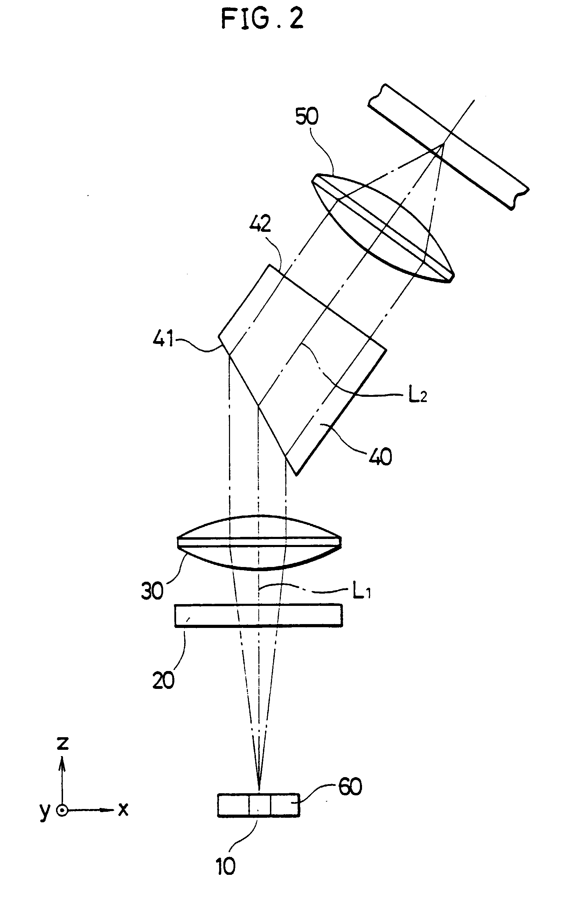

First, as shown in Figs. 1 and 2, three axis rectangular coordinates x-y-z are determined as follows in conjunction with an optical head device of the present invention. The z-axis is determined to be parallel to an optical axis $L_1$ of a light beam emitted from a laser light source 10 as light generation means. The y-axis is determined to be orthogonal to the z-axis and further parallel to a hypothetical line extending through a projecting point of the laser light source 10 and the center of a light-receiving face of a photodetector 60 as photodetecting means (or a converging point on the photodetector 60 in a just-in-focus state), while the x-axis is determined to be orthogonal to both the y and z-axes. Additionally, the y-axis can be determined so as to be parallel to a division line 21 of a diffracting element 20, which are described later. The direction parallel to the y-axis is hereinafter referred to as a reference direction. Further, directions as indicated by arrows of the respective x, y and z-axes in Figs 1 are supposed to be the respective positive directions. Additionally, Fig. 2 is a side view of the optical head device of Fig. 1, seen from the positive side toward the negative side along the y-axis.

A light beam emitted by the oscillation of the laser light source 10 gradually spreads to have an intensity distribution of an elliptic shape in its cross section orthogonal to the optical axis $L_1$. (Additionally, such an intensity distribution of light, related to a cross section orthogonal to the optical axis, is hereinafter referred to simply as a cross-sectional intensity distribution.) Here, the laser light source 10 is arranged so that the major axis of the elliptic shape is parallel to the y-axis, that is, the reference direction.

Moreover, respective centers of the diffracting element 20, a collimating lens 30 and an end face 41 of a shaping prism 40 are aligned along the optical axis $L_1$. Here, the end face 41 is a surface to receive the light beam emitted by the laser light source 10. The diffracting element 20 for transmitting the light beam emitted by the laser light source 10 is of a disc-shape, square-shape, elliptic-shape, etc. whose surfaces are parallel to the x-y plane. The light beam transmitted through the diffracting element 20 passes through the collimating lens 30. At this time, the collimating lens 30 produces a parallel beam of light from the light beam spreading in the shape of cone, directed thereto. Similarly, a cross-sectional intensity distribution of the parallel beam of light projected from the collimating lens 30 shows an elliptic shape whose major axis is parallel to the y-axis, that is, the reference direction.

The parallel beam of light projected from the collimating lens 30 is directed to the end face 41 of the shaping prism 40. The end face 41 is inclined with respect to the y-z plane and x-y plane. Therefore, the intensity distribution of the parallel beam of light is diffused in the minor axis direction by the end face 41 to form a substantially round shape. The parallel beam of light having impinged upon the end face 41 proceeds along the optical axis $L_2$ in the shaping prism 40 and is projected from the other end face 42. As shown in Fig. 2, since the end face 42 is orthogonal to the optical axis $L_2$, the parallel beam of light is projected from the end face 42 in a direction parallel to the optical axis $L_2$ and directed to the object lens 50.

The object lens 50 is disposed so as to have its optical axis coincided with the optical axis $L_2$, and converges the parallel beam of light on a recording track 71 formed on an optical disk 70 as a recording medium. A recording surface of the optical disk 70 is placed perpendicular to the optical axis $L_2$. A tangent direction to the rotatable recording track 71 at a converging point is represented by an arrow T in the drawing. Additionally, the tangent direction T is parallel to the x-z plane.

The light beam reflected from the recording track 71 (hereinafter referred to simply as the reflected beam) successively passes through the object lens 50, shaping prism 40 and collimating lens 30 following in the reverse order the path whereby the light beam was directed to the recording track 71. The reflected beam having passed through the shaping prism 40 forms a parallel beam of light. The reflected beam projected from the end face 41 has its intensity distribution returned from the round shape to an elliptic shape. Further, the reflected beam is directed to the diffracting element 20 by the collimating lens 30 along the path converging on the projecting point of the laser light source 10.

The diffracting face of the diffracting element 20 is equally divided into two regions by a division line 21 parallel to the y-axis, that is, the reference direction. Therefore, an elliptic bright portion formed on the diffracting element 20 by the reflected beam directed thereto has its major axis positioned substantially on the division line 21. The diffracting regions separated by the division line 21 are provided with respective first and second diffraction gratings 22 and 23. Grating lines formed on each diffraction grating 22 or 23 have a predetermined pitch and are orthogonal to the division line 21, that is, form a number of parallel lines extending in the x-direction. Moreover, the pitch of the grating lines in the first diffraction grating 22 is set to be greater than that in the second diffraction grating 23. With the above arrangement, each diffracting grating 22 or 23 diffracts a part of the reflected beam directed thereto in a direction substantially parallel to the y-z plane including the division line 21. Here, a diffraction angle with respect to the part of the reflected beam diffracted by the first diffraction grating 22 toward the photodetector 60 (hereinafter referred to simply as the first diffracted beam) is set to be smaller than that with respect to another part of the reflected beam diffracted by the second diffraction grating 23 toward the photodetector 60 (hereinafter referred to simply as the second diffracted beam).

The diffracted beams are directed to the photodetector 60. The photodetector 60 has a photodetecting face whereon these diffracted beams are projected. The photodetecting face is equally divided into two regions by a first division line 64 parallel to the x-axis. One of the photodetecting regions positioned by the side of the laser light source 10 is referred to as a first detecting region 61. The other photodetecting region is further equally divided into two detecting regions, that is, a second detecting region 62 and a third detecting region 63 by a second division line 65 which is substantially parallel to the y-axis. The detecting regions 61, 62 and 63 respectively release detection signals according to intensities of the respective diffracted beams directed thereto.

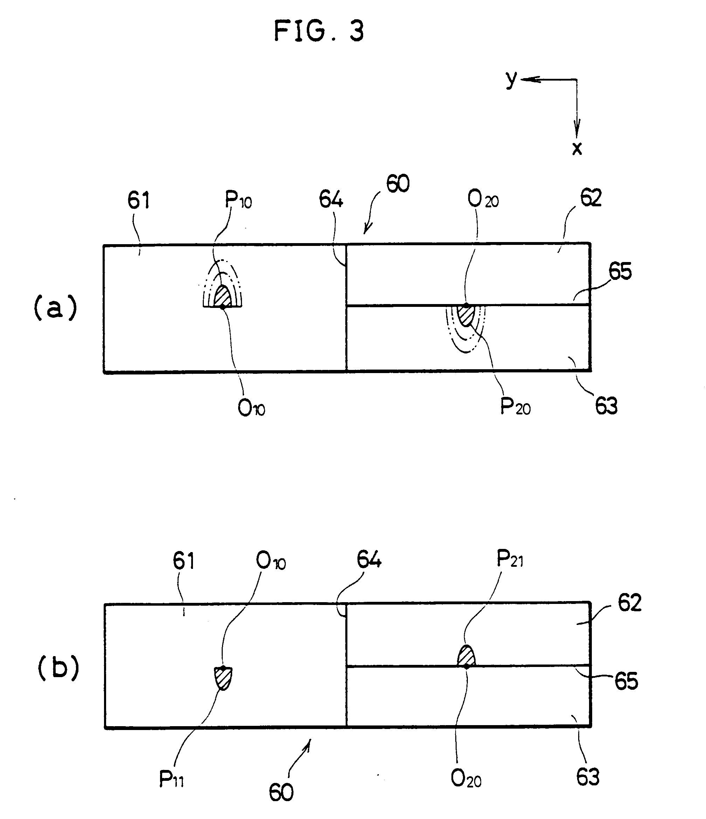

When a light beam having a reference wave-length $\lambda_0$, emitted from the laser light source 10 is converged on the recording track 71 in the just-in-focus state, the resulting reflected beam from the recording track 71 is diffracted by the diffraction grating 22 and 23 so as to be divided into two parts. Then, as illustrated in Figs. 3 (a) and 3(b), the first diffracted beam is converged on a center $O_{10}$ of the first detecting region 61, while the second diffracted beam is converged on a center $O_{20}$ of the second division line 65.

In an optical head device having the above arrangement, the object lens 50 is controlled according to detection signals released by the respective detecting regions 61, 62 and 63. The following description will discuss how the control of the object lens 50 is performed.

First, as illustrated in Fig. 3(a), in a state where the object lens 50 is located close to the optical disk 70, the second diffracted beam derived from the second diffraction grating 23 having a relatively narrower pitch of grating, forms a bright portion $P_{20}$ on the third detecting region 63 in the vicinity of the center $O_{20}$. The bright portion $P_{20}$ has a semi-elliptic shape lying in the positive direction of the x-axis, and its major axis is parallel to the first division line 64, that is, the x-axis. On the other hand, the first diffracted beam derived from the first diffraction grating 22 having a relatively wider pitch of grating, forms a bright portion $P_{10}$ in the vicinity of the center $O_{10}$. The bright portion $P_{10}$ has a semi-elliptic shape lying in the negative direction of the x-axis, and its major axis is parallel to the x-axis as with the aforementioned case. Thus, the bright portions $P_{10}$ and $P_{20}$ are substantially opposite to each other in their shapes.

Meanwhile, as illustrated in Fig. 3(b), in a state where the object lens 50 is located far away from the optical disk 70, the second diffracted beam forms a bright portion $P_{21}$ on the second detecting region 62 in the vicinity of the center $O_{20}$. The bright portion $P_{21}$ has a semi-elliptic shape lying in the negative direction of the x-axis, which is opposite to the above-mentioned case having the object lens 50 located close to the optical disk 70, and its major axis is parallel to the x-axis as with the above-mentioned case. On the other hand, the first diffracted beam forms a bright portion $P_{11}$ in the vicinity of the center $O_{10}$ of the first detecting region 61. Similarly, the bright portion $P_{11}$ has a semi-elliptic shape lying in the positive direction of the x-axis, which is opposite to the above-mentioned case having the object lens 50 located close to the optical disk 70, and its major axis is parallel to the x-axis as with the above-mentioned case. The bright portions $P_{11}$ and $P_{21}$ are substantially opposite to each other in their shapes.

As illustrated in Fig. 3(a), each shape of the bright portions $P_{10}$ and $P_{20}$ is deformed with its center remained the same, according to an amount of displacement of the optical disk 70 based on a focal point of the object lens 50 as a reference. (The same is true with respect to the shapes of the bright portion $P_{11}$ and $P_{21}$.)

Here it is noted that in the optical head device of the present invention shown in Fig. 1, rate of change of the shapes of the bright portions $P_{10}$ and $P_{20}$ with respect to the x-direction (that is, rate of enlargement or rate of reduction) is greater than rate of change of those in the optical head device shown in Fig. 7.

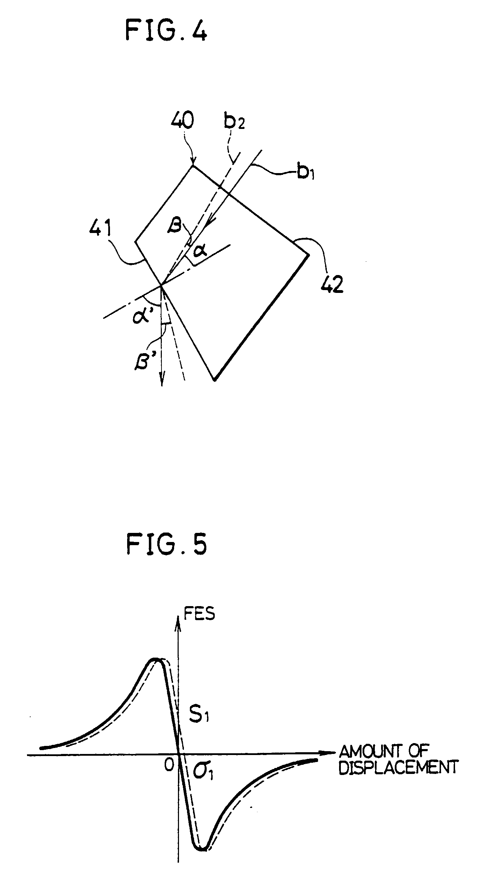

This is because of optical properties of the shaping prism 40. In other words, in the optical head device shown in Fig. 1, a reflected beam which is produced from the light beam focused on the optical disk 70 is transmitted through the shaping prism 40 and projected therefrom in a manner as shown by a solid line in Fig. 4. In Fig. 4, suppose the reflected beam $b_1$ from the optical disk 70 hits the end face 41 of the shaping prism 40 at an angle $\alpha$ from the collimating lens 30 side, and let us denote an angle of refraction of the reflected beam $b_1$ by $\alpha'$ and a refractive index of the shaping prism 40 by n. Then using Snell's Law, the following equation holds:

$$n \cdot \sin \alpha = \sin \alpha'. \qquad (1)$$

Suppose a light beam directed onto the optical disk 70 has a focus error, thereby causing a reflected beam $b_2$ from the optical disk 70 to tilt with respect to the reflected beam $b_1$. Further, a difference of an incident angle of the reflected beam $b_2$ and the incident angle $\alpha$ of the reflected beam $b_1$ with respect to the end face 41 is denoted by $\beta$, and a difference of an angle of refraction of the reflected beam $b_2$ and the angle of refraction $\alpha'$ of the reflected beam $b_1$ is denoted by $\beta'$. Then, a relationship between $\beta$ and $\beta'$ is given by the following equation:

$$\beta' = \sin^{-1} (n \cdot \sin \alpha) - \sin^{-1} \{n \cdot \sin(\alpha - \beta)\}. \qquad (2)$$

The equation (2) shows that the difference $\beta'$ in the angles of refraction of the respective reflected beams at the end face 41 of the outgoing side is amplified in comparison with the difference $\beta$ when there occurs a focus error in the light beam to be projected on the optical disk 70. In other words, in the case of the optical head device shown in Fig. 1, shaping function of the shaping prism 40 is amplified with respect to the direction parallel to the minor axis of the cross-sectional intensity distribution of the light beam, that is, the x direction. Therefore, since rate of change of the shapes of the bright portions $P_{10}$ and $P_{20}$ with respect to the x direction is greater than rate of change of those with respect to the y direction, each of the bright portions $P_{10}$ and $P_{20}$ has a prolonged semi-elliptic shape lying in the x direction, as shown in Fig. 3(a).

Suppose that detection signals released from the detecting regions 61, 62 and 63 are represented respectively as Sa, Sb and Sc. Then, a focus error signal FES corresponding to a deviation between the optical disk 70 and the focal point of the object lens 50 is obtained by calculating a difference of the detection signals Sb and Sc; (Sb - Sc). Fig. 5 shows an example of the FES curve with respect to the optical head device shown in Fig. 1. As described earlier, when the shaping prism 40 shapes the cross-sectional intensity distribution not in the major-axis direction but in the minor-axis direction, the shapes of the bright portions $P_{10}$ and $P_{20}$ formed on the photodetector 60 change greatly in the x direction. For this reason, as shown by a solid line in Fig. 5, its FES intensity shows an abrupt change in the vicinity of a zero-cross point on the FES curve.

On the other hand, in the case of the optical head device shown in Fig. 7, a shaping prism 84 shapes a cross-sectional intensity distribution in the minor-axis direction, and the minor axis is set to be parallel to the y direction. For this reason, unlike the case of the bright portions $P_{10}$ and $P_{20}$, rate of shape change of bright portions $P_1$ and $P_2$ formed on a photodetector 86 shown in Fig. 8, is substantially small with respect to the x direction. Therefore, as shown by a solid line in Fig. 9, its FES intensity shows a gradual change in the vicinity of a zero-cross point on an FES curve f in comparison with the FES curve shown in Fig. 5.

Consequently, when a converging state of the light beam on the optical disk 70 slightly deviates from the just-in-focus state, rate of change in FES intensity is relatively great in the optical head device shown in Fig. 1. Therefore, a higher response in focusing control can be obtained.

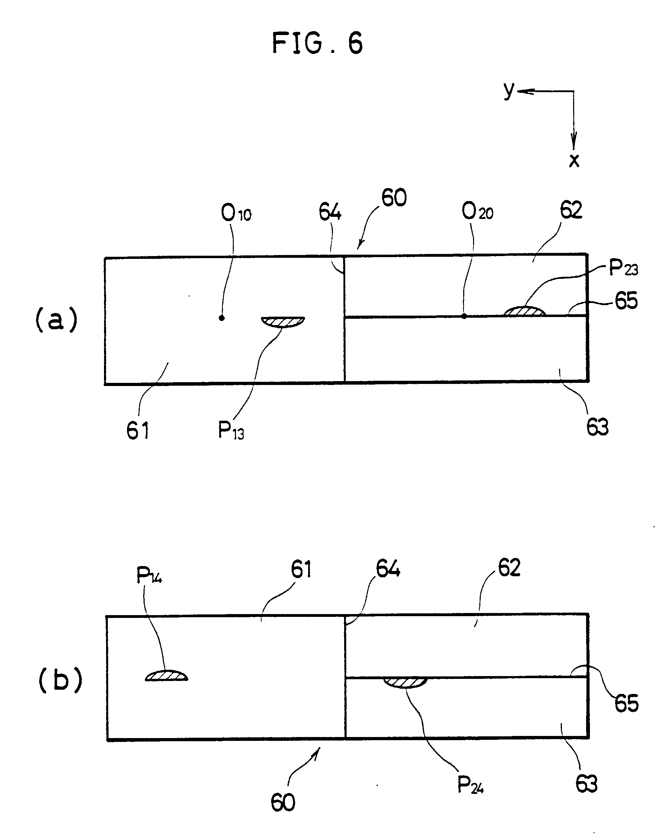

Next, in the case where ambient temperature has risen with respect to the laser light source 10, causing a wave-length $\lambda$ of a light beam emitted from the laser light source 10 to become longer than the reference wave-length $\lambda_0$, each of diffraction angles at the diffraction gratings 22 and 23 becomes greater. Then, each of the diffracted beams has an extended light path to the photodetector 60. That is, the first and second diffracted beams derived from the reflected beam with the wave-length $\lambda$ are respectively focused before reaching the detecting face of the photodetector 60. As a result, as illustrated in Fig. 6(a), a bright portion $P_{13}$ formed on the first detecting region 61 by the first diffracted beam is dislocated from the center $O_{10}$ of the first detecting region 61 to move away from the laser light source 10 along the y direction, that is, the reference direction. Similarly, a bright portion $P_{23}$ formed on the second detecting region 62 by the second diffracted beam is dislocated from the center $O_{20}$ of the second division line 65 to move away from the laser light source 10 along the reference direction.

Each of the bright portions $P_{13}$ and $P_{23}$, unlike those shown in Fig. 3, shows a semi-elliptic shape whose major axis is parallel to the second division line 65. These shapes are derived from the fact that the bright portion formed on the diffracting element 20 by the reflected beam from the optical disk 70 has an elliptic shape whose major axis is parallel to the division line 21. Further, since each focal point of the diffracted beams is formed in front of the detecting face of the photodetector 60, the orientations of the bright portions $P_{13}$ and $P_{23}$ lying in the x directions from the major axis are the same as those of the bright portions $P_{11}$ and $P_{21}$ (see Fig. 3 (b)) which are obtained in the case of moving the optical disk 70 away from the object lens 50. Therefore, the bright portion $P_{23}$ formed on the second detecting region 62 lies in the negative direction of the x-axis, while the bright portion $P_{13}$ lies in the positive direction of the x-axis.

On the contrary, in the case where ambient temperature has dropped with respect to the laser light source 10, causing a wave-length $\lambda'$ of a light beam emitted from the laser light source 10 to become shorter than the reference wave-length $\lambda_0$, each of diffraction angles at the diffraction gratings 22 and 23 becomes smaller. For this reason, the first and second diffracted beams derived from the reflected beam with the wave-length $\lambda'$ are respectively focused behind the detecting face of the photodetector 60. As a result, as illustrated in Fig. 6(b), a bright portion $P_{14}$ formed on the first detecting region 61 by the first diffracted beam is dislocated from the center $O_{10}$ of the first detecting region 61 to be positioned closer to the laser light source 10 along the reference direction. Similarly, a bright portion $P_{24}$ formed on the third detecting region 63 by the second diffracted beam is dislocated from the center $O_{20}$ of the second division line 65 to be positioned closer to the laser light source 10 along the reference direction.

Each of the bright portions $P_{14}$ and $P_{24}$ also shows a semi-elliptic shape whose major axis is parallel to the second division line 65. Further, since each focal point of the diffracted beams is formed behind the detecting face of the photodetector 60, the bright portion $P_{24}$ lies in the positive direction of the x-axis to be located on the third detecting region 63 while the bright portion $P_{14}$ lies in the negative direction of the x-axis, both having the opposite orientations to the respective bright portions $P_{23}$ and $P_{13}$.

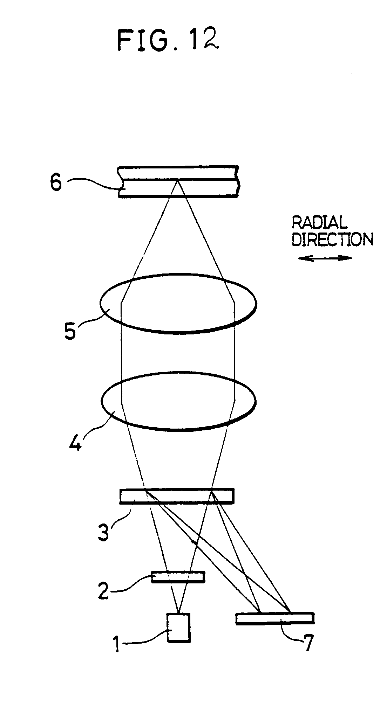

Also in these cases, the focus error signal FES is obtained by the aforementioned equation, (Sb - Sc). However, in proportion to variations of the wave-length, each shape of the bright portions $P_{23}$ and $P_{24}$ respectively formed on the second detecting region 62 and the third detecting region 63 becomes larger keeping a similar shape, and each position of those varies. For this reason, even if a light beam is projected on the optical disk 70 in the just-in-focus state, the focus error signal FES does not become "0". One example of the FES curve is shown by a broken line in Fig. 5, wherein the wave-length $\lambda$ of the light beam is longer than the reference wave-length $\lambda_0$. The FES curve shown by the broken line possesses an undesired detection value $S_1$ in the case of the just-in-focus state. Accordingly, there is produced an offset value $\sigma_1$ that forms an improper target value for focusing control. However, since the bright portion $P_{23}$ is formed in the vicinity of the second division line 65 of the second detecting region 62 in an semi-elliptic shape whose major axis is parallel to the second division line 65, and further, detection sensitivity is low in the vicinity of the second division line 65, the undesired detection value $S_1$ due to a longer wave-length of the light beam can be extremely suppressed. In addition, since responsivity of the FES has been improved as described earlier, the offset value $\sigma_1$ of the optical disk 70 is further extremely reduced. This offset value $\sigma_1$ is sufficiently smaller than the offset value $\sigma_2$ shown in Fig. 12.

Similarly, since detection sensitivity is low in the vicinity of the second division line 65 in the third detecting region 63 and responsivity of the focus error signal FES has been improved, an undesired value of the focus error signal FES in the just-in-focus state and an offset value of the optical disk 70, due to a shorter wave-length of the light beam, can be extremely suppressed, thereby making it possible to reduce an offset value from the focal point with respect to the optical disk 70 to a substantially small amount.

Lastly, the following description will discuss structural examples of an optical head device for obtaining a more desirable tracking error signal RES in conjunction with the structure of the optical head device shown in Fig. 1. Two cases are shown as those structural examples.

(1) With respect to relative positions between the optical head device and the recording track 71 on the optical disk 70, both shown in Fig. 1, a tangent direction at the converging point of the recording track 71 is set to be parallel to the y-axis. That is, the above tangent direction is orthogonal to the tangent direction T shown in Fig. 1.

(2) The three-beam method is adopted:

As shown in Fig. 12, in accordance with the three-beam method, a light beam is projected from a semiconductor laser 1, diffracted in a first diffracting element 2 and split into a zero-order diffracted light (main beam) and ±1 order diffracted lights (a pair of sub beams). In Fig. 12, the ±1 order diffracted lights are comprised in a plane orthogonal to the surface of the paper. The main beam and the sub beams are further diffracted in a second diffracting element 3. Zero-order diffracted lights respectively produced by the main beam and the sub beams are transmitted through a collimating lens 4 to be focused onto a recording medium 6 by an objective lens 5. Return lights reflected off the recording medium 6 pass through the objective lens 5 and the collimating lens 4, and are diffracted in the second diffracting element 3. First order diffracted lights are then directed onto a light receiving element 7 from which data signal, tracking error signal and focus error signal can be obtained.

When, for example, data is recorded in the form of physical pits on the disc-shaped recording medium 6, the data is read out by focusing the zero order diffracted light produced by the main beam in the second diffracting element 3 on the -physical pits. The return light of the zero order diffracted light is diffracted again in the second diffracting element 3 to produce first order diffracted lights. The data signal is derived from the intensity of these first order diffracted lights.

The zero order diffracted lights produced by the two sub beams in the second diffracting element 3 are focused on positions symmetrical with respect to the zero order diffracted light produced by the main beam in the second diffracting element 3. These positions are offset greatly in a track direction and offset slightly in a radial direction from the position on the recording medium 6 where the zero order diffracted light of the main beam is focused. The return lights are respectively diffracted in the second diffracting element 3 to produce first order diffracted lights. The tracking error signal is derived from the intensities of these first order diffracted lights.

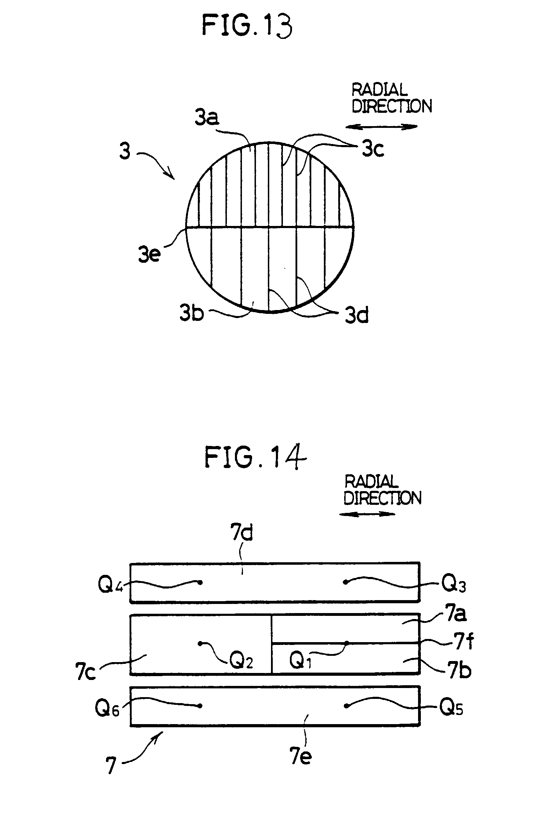

Fig. 13 shows the second diffracting element 3 as seen from the recording medium 6. As shown in Fig. 13, the second diffracting element 3 is divided into two diffracting regions 3a and 3b that are delineated by a division line 3e and whereon gratings 3c and 3d are respectively formed. The gratings 3c and 3d have mutually different pitches and the directions thereof are orthogonal to the division line 3e. Here, the direction of the division line 3e is set so as to coincide with the radial direction of the recording medium 6. As shown in Fig. 14, the photodetector 7 is divided into five light receiving regions 7a to 7e.

In the above arrangement, when the light beam projected from the semiconductor laser 1 is precisely focused on the recording medium 6, a portion of the return light corresponding to the zero order diffracted light produced by the main beam in the second diffracting element 3, is diffracted in the diffracting region 3a of the second diffracting element 3 to produce a first order diffracted light. This first order diffracted light is focused on a division line 7f separating the light receiving regions 7a and 7b of the photodetector 7, to form a spot-shaped diffracted image $Q_1$. Another portion of the return light corresponding to the zero order diffracted light of the main beam produced in the second diffracting element 3, is diffracted in the diffracting region 3b of the second diffracting element 3 to produce a first order diffracted light. This first order diffracted light is focused on the light receiving region 7c of the photodetector 7 to form a spot-shaped diffracted image $Q_2$. The return lights corresponding to the zero order diffracted lights produced by the two sub beams in the second diffracting element 3, respectively form two spot-shaped diffracted images $Q_3$ and $Q_4$ and two spot-shaped diffracted images $Q_5$ and $Q_6$ on the light receiving regions 7d and 7e of the photodetector 7.

Supposing that $S_{1_a}$ to $S_{1_e}$ respectively represent output signals released from the light receiving regions 7a to 7e, the focus error signal may be obtained by calculating $(S_{1_a} - S_{1_b})$. The tracking error signal may be obtained by calculating $(S_{1_d} - S_{1_e})$ and the data signal may be obtained by calculating $(S_{1_a} + S_{1_b} + S_{1_c})$.

As described above, in the optical head device according to the present invention, the light generation means projects light whose intensity distribution has an elliptic shape with its major axis parallel to the reference direction, and the division line of the diffraction means is set to be parallel to the reference direction. Thus, the reflected light directed to the diffraction means forms an elliptic bright portion whose major axis is situated on the division line of the diffraction means. In the case of occurrence of a wave-length variation in the light emitted by the light generation means, a thin semi-elliptic bright portion is formed along the reference direction in the vicinity of the division line substantially parallel to the reference direction in the photodetector. Since detection sensitivity is low in the vicinity of the division lines in the photodetector, an offset in focusing control due to the wave-length variation is remarkably reduced.

Further, since the optical head device of the present invention includes an intensity distribution shaping means for shaping the intensity distribution of the light projected by the light generation means in the minor axis direction of the elliptic shape, the rate of change of the shape of the bright portion formed on the photodetecting means, is greater with respect to the minor axis direction than with respect to the major axis direction. As a result, abrupt changes occur in the focus error signal, and therefore response sensitivity in the focusing control can be improved.

The invention being thus described, it will be obvious that the same may be varied in many ways without departing from the scope of the following claims.

**Claims**

1. An optical head device comprising:

   a light generation means (10) for generating a light beam having a substantially elliptical intensity distribution in cross section orthogonal to the beam's optical axis (L$_1$), the major axis of the elliptic shape being parallel to a reference direction (y);
   photodetecting means (60) for generating detection signals so as to enable the derivation of a focus error signal, the photodetecting means including a plurality of photodetecting sections (61,62,63) formed by a plurality of division lines (64,65) dividing a light-receiving face thereof, the detection signals being released by respective said photodetecting sections according to the intensity of the light received thereby, at least one of the plurality of division lines (65) being substantially parallel to the reference direction;
   diffraction means (20) having a diffraction face divided into two diffracting regions (22,23) by a single division line (21) which extends parallel to the reference direction; and
   optical means (30,40,50) for converging the light emitted from the light generation means on a recording track (71) formed on a recording medium (70) and further directing reflected light from the recording track to the diffraction means (20) so that the major axis of an elliptic bright portion formed on the diffracting face by the reflected light may be positioned on said division line (21) of the diffraction means, said optical means including intensity distribution shaping means (40) for shaping an intensity distribution of the light to be directed on the recording track into a substantially circular shape by diffusing the elliptic intensity distribution of the light emitted by the light generation means with respect to the minor axis, and permitting the intensity distribution of the light reflected from the recording track to restore its substantially elliptic shape by a reversed function to the above diffusing function,
   whereby a value of the focus error signal derived from the detection signals released by two photodetecting sections (62,63) separated by said one of the division lines (65) which is substantially parallel to the reference direction is allowed to become zero so as to indicate an in-focus state of said converged light beam on said recording medium when a part of the reflected light that has been diffracted by one of the two diffracting regions (23) of the diffraction means is converged on said one of the division lines (65) of the photodetecting means.

2. An optical head device according to claim 1, wherein the optical means further comprises:
   parallel light beam forming means (30) for forming the light emitted from the light generation means into a parallel beam of light.

3. An optical head device according to claim 2, wherein the parallel light beam forming means comprises:
   collimating lens means for forming the light emitted from the light generation means and transmitted through the diffraction means into a parallel beam of light to be directed to the intensity distribution shaping means (40).

4. An optical head device according to any of claims 1 to 3, wherein the optical means further comprises:
   converging means (50) for converging on the recording track (71) of the recording medium (70) the light whose intensity distribution is shaped into a circular shape by the intensity distribution shaping means (40).

5. An optical head device according to any preceding claim, wherein said two diffracting regions are provided with respective gratings of different pitch; and wherein the photodetecting means includes a first photodetecting section (61) and a second photodetecting section (62,63) formed by a first division line (64) extending in a direction orthogonal to the reference direction (y), the second photodetecting section (62,63) comprising a third photodetecting section (62) and a fourth photodetecting section (63) formed by a second division line (65) extending from a middle point of the first division line (64) in a direction substantially parallel to the reference direction (y),

> whereby when a part of the reflected light having been diffracted by said one of the diffracting regions (23) of the diffraction means (20) is converged on the second division line (65) of the photodetecting means (60), a value of the focus error signal is allowed to become zero while the other part of the reflected light diffracted by the other diffracting region (22) is converged on a substantial center of the first photodetecting section (61), and
> when a detection signal released from the first photodetecting section (61) is represented as Sa; a detection signal released for the third photodetecting section (62) is represented as Sb; and a detection signal released from the fourth photodetecting sections (63) is represented as Sc, a reproduction signal of information recorded on the recording medium (70) is obtained by a calculation so Sa + Sb + Sc; the focus error signal is obtained by a calculation of Sc - Sb; and a tracking error signal is obtained by a calculation of Sa - (Sb + Sc).

6. An optical head device according to any of claims 1 to 4 wherein said two diffracting regions (22,23) of said diffraction means (20) are arranged so that the respective positions ($O_{10}$,$O_{20}$) of convergence on the photodetecting means (60) of the respective parts of the reflected light that have been diffracted by respective ones of said two diffracting regions (22,23) are spaced apart in said reference direction.

**Patentansprüche**

1. Optischer Kopf mit:

   - einer Lichterzeugungseinrichtung (10) zum Erzeugen eines Lichtstrahls mit im wesentlichen elliptischer Intensitätsverteilung in einem Querschnitt rechtwinklig zur optischen Strahlachse

($L_1$), wobei die Hauptachse der elliptischen Form parallel zu einer Bezugsrichtung (Y) verläuft;

   - einer Photodetektoreinrichtung (60) zum Erzeugen von Erfassungssignalen, um die Herleitung eines Fokusabweichungssignals zu ermöglichen, wobei die Photodetektoreinrichtung eine Anzahl Photodetektorabschnitte (61, 62, 63) aufweist, die durch eine Anzahl Unterteilungslinien (64, 65) gebildet werden, die die Lichtempfangsfläche derselben unterteilen, wobei die Erfassungssignale von jeweiligen Photodetektorabschnitten abhängig von der von diesen empfangenen Lichtintensität ausgegeben werden, wobei mindestens eine der Anzahl von Unterteilungslinien (65) im wesentlichen parallel zur Bezugsrichtung verläuft;

   - einer Beugungseinrichtung (20) mit einer Beugungsfläche, die durch eine einzelne Unterteilungslinie (21), die sich parallel zur Bezugsrichtung erstreckt, in zwei Beugungsbereiche (22, 23) unterteilt ist; und

   - einer optischen Einrichtung (30, 40, 50) zum Konvergieren des von der Lichterzeugungseinrichtung emittierten Lichts auf eine auf einem Aufzeichnungsträger (70) ausgebildete Aufzeichnungsspur (71) und ferner zum Lenken von Reflexionslicht von der Aufzeichnungsspur auf die Beugungseinrichtung (20) in solcher Weise, daß die Hauptachse eines auf der Beugungsfläche auf das reflektierte Licht erzeugten elliptischen, hellen Abschnitts auf der Unterteilungslinie (21) der Beugungseinrichtung liegt, wobei die optische Einrichtung eine Intensitätsverteilungs-Formungseinrichtung (40) aufweist, um die Intensitätsverteilung des auf die Aufzeichnungsspur zu lenkenden Lichts dadurch auf im wesentlichen Kreisform zu verteilen, daß die elliptische Intensitätsverteilung des von der Lichterzeugungseinrichtung emittierten Lichts in bezug auf die Nebenachse aufgeweitet wird, wobei sie es ermöglicht, daß die Intensitätsverteilung des von der Aufzeichnungsspur reflektierten Lichts ihre im wesentlichen elliptische Form durch eine Funktion umgekehrt zur obigen Aufweitungsfunktion wiedererlangt;

   - wodurch der Wert des aus den Erfassungssignalen hergeleiteten Fokusabweichungssignals, wie sie von den zwei Photodetektorabschnitten (62, 63) ausgegeben werden, die durch die eine der Unterteilungslinien (65), die im wesentlichen parallel zur Bezugsrichtung verläuft, unterteilt sind, zu Null werden kann, um den fokussierten Zustand des auf den Aufzeichnungsträger konvergierten Lichtstrahls anzuzeigen, wenn ein Teil des reflektierten Lichts, wie von einem der zwei Beugungsbereiche (23) der Beugungseinrichtung gebeugt, auf die eine der Unterteilungslinien (65) der Photodetektoreinrichtung konvergiert wird.

**2.** Optischer Kopf nach Anspruch 1, bei dem die optische Einrichtung ferner eine Parallellichtstrahl-Formungseinrichtung (30) aufweist, um das von der Lichterzeugungseinrichtung emittierte Licht zu einem parallelen Lichtstrahl zu formen.

**3.** Optischer Kopf nach Anspruch 2, bei dem die Parallellichtstrahl-Formungseinrichtung eine Kollimatorlinseneinrichtung aufweist, um das von der Lichterzeugungseinrichtung emittierte und durch die Beugungseinrichtung hindurchgestrahlte Licht zu einem parallelen Lichtstrahl zu formen, der auf die Intensitätsverteilungs-Formungseinrichtung (40) gelenkt wird.

**4.** Optischer Kopf nach einem der Ansprüche 1 bis 3, bei dem die optische Einrichtung ferner eine Konvergiereinrichtung (50) aufweist, um das Licht, dessen Intensitätsverteilung durch die Intensitätsverteilungs-Formungseinrichtung (40) zu Kreisform geformt wurde, auf die Aufzeichnungsspur (71) auf dem Aufzeichnungsträger (70) zu konvergieren.

**5.** Optischer Kopf nach einem der vorstehenden Ansprüche, bei dem die zwei Beugungsbereiche mit jeweiligen Gittern mit verschiedenen Strichweiten versehen sind und bei dem die Photodetektoreinrichtung einen ersten Photodetektorabschnitt (61) und einen zweiten Photodetektorabschnitt (62, 63) aufweist, die durch eine erste Unterteilungslinie (64) gebildet sind, die sich in einer Richtung rechtwinklig zur Bezugsrichtung (Y) erstreckt, wobei der zweite Photodetektorabschnitt (62, 63) einen dritten Photodetektorabschnitt (62) und einen vierten Photodetektorabschnitt (63) aufweist, die durch eine zweite Unterteilungslinie (65) gebildet sind, die sich vom Mittelpunkt der ersten Unterteilungslinie (64) in einer Richtung im wesentlichen parallel zur Bezugsrichtung (Y) erstreckt;

- wobei dann, wenn ein Teil des reflektierten Lichts, wie es durch den einen der Beugungsbereiche (23) der Beugungseinrichtung (20) gebeugt wurde, auf die zweite Unterteilungslinie (65) der Photodetektoreinrichtung (60) konvergiert wird, der Wert des Fokusabweichungssignals Null werden kann, während der andere Teil des reflektierten Lichts, wie durch den anderen Beugungsbereich (22) gebeugt, im wesentlichen auf das Zentrum des ersten Photodetektorabschnitts (61) konvergiert wird; und
- wobei dann, wenn das vom ersten Photodetektorabschnitt (61) ausgegebene Signal mit Sa repräsentiert wird, das vom dritten Photodetektorabschnitt (62) ausgegebene Erfassungssignal mit Sb repräsentiert wird und das vom vierten Photodetektorabschnitt (63) ausgegebene Erfassungssignal mit Sc repräsentiert wird, das Wiedergabesignal für auf dem Aufzeichnungsträger (70) aufgezeichnete Information durch die Berechnung Sa + Sb + Sc erhalten wird, das Fokusabweichungssignal durch die Berechnung Sc - Sb erhalten wird und ein Spurabweichungssignal durch die Berechnung Sa - (Sb + Sc) erhalten wird.

**6.** Optischer Kopf nach einem der Ansprüche 1 bis 4, bei dem die zwei Beugungsbereiche (22, 23) der Beugungseinrichtung (20) so angeordnet sind, daß die jeweiligen Konvergenzpositionen ($O_{10}$, $O_{20}$) auf der Photodetektoreinrichtung (60) hinsichtlich der jeweiligen Teile des reflektierten Lichts, die durch die jeweiligen der zwei Beugungsbereiche (22, 23) gebeugt wurden, in der Bezugsrichtung voneinander beabstandet sind.

**Revendications**

**1.** Dispositif de tête optique, comprenant :

un moyen générateur de lumière (10) pour émettre un faisceau lumineux ayant une répartition d'intensité sensiblement elliptique dans la section transversale orthogonale à l'axe optique ($L_1$) du faisceau, le grand axe de la forme elliptique étant parallèle à une direction de référence (y) ;
un moyen photodétecteur (60) pour émettre des signaux de détection de manière à permettre l'obtention d'un signal d'erreur de focalisation, le moyen photodétecteur comprenant une pluralité de parties photodétectrices (61, 62, 63) formées par une pluralité de lignes de séparation (64, 65) divisant une face réceptrice de lumière de celui-ci, les signaux de détection étant émis par lesdites parties photodétectrices respectives en fonction de l'intensité de la lumière reçue par elles, au moins une (65) de la pluralité de lignes de séparation étant sensiblement parallèle à la direction de référence ;
un moyen de diffraction (20) ayant une face de diffraction divisée en deux zones de diffraction (22, 23) par une seule ligne de séparation (21), qui s'étend parallèlement à la direction de référence ; et
des moyens optiques (30, 40, 50) pour faire converger la lumière, émise par le moyen générateur de lumière, sur une piste d'enregistrement (71) formée sur un support d'enregistrement (70) et pour en outre diriger vers le moyen de diffraction (20) la lumière réfléchie par la piste d'enregistrement, de telle manière que le grand axe d'une partie elliptique brillante, formée sur la face de diffraction par la lumière réfléchie, puisse être situé sur ladite ligne de séparation (21) du moyen de diffraction, lesdits moyens optiques comprenant un moyen de mise en forme de répartition d'intensité (40) pour mettre en forme une répartition d'intensité de la lumière à diriger sur la piste d'enregistrement, pour lui conférer une forme sensiblement circulaire en diffusant la répartition elliptique de l'intensité de la lumière, émise par le moyen générateur de lumière, par rapport au petit axe, et pour permettre que la répartition d'intensité de la lumière, réfléchie par la piste d'enregistrement, reprenne sa forme sensiblement elliptique par un fonctionnement inverse du fonctionnement de diffusion précédent,

ce qui permet à une valeur du signal d'erreur de focalisation obtenu à partir des signaux de détection émis par deux parties photodétectrices (62, 63), séparées par ladite ligne de séparation (65), qui est sensiblement parallèle à la direction de référence, de devenir zéro de manière à indiquer un état focalisé dudit faisceau lumineux amené à converger sur ledit support d'enregistrement, lorsqu'une partie de la lumière réfléchie, qui a été diffractée par l'une (23) des deux zones de diffraction du moyen de diffraction, est amenée à converger sur ladite ligne (65) des lignes de séparation du moyen photodétecteur.

**2.** Dispositif de tête optique selon la revendication 1, dans lequel les moyens optiques comprennent en outre :

un moyen de formation de faisceau de rayons lumineux parallèles (30) pour former la lumière, émise par le moyen générateur de lumière, en un faisceau de rayons lumineux parallèles.

**3.** Dispositif de tête optique selon la revendication 2, dans lequel le moyen de formation de faisceau de rayons lumineux parallèles comprend :

un moyen formant lentille collimatrice pour former la lumière, émise à partir du moyen générateur de lumière et transmise par l'intermédiaire du moyen de diffraction, en un faisceau de rayons lumineux parallèles à diriger vers le moyen de mise en forme de répartition d'intensité (40).

**4.** Dispositif de tête optique selon l'une quelconque des revendications 1 à 3, dans lequel les moyens optiques comprennent en outre ;

un moyen de convergence (50) pour faire converger, sur la piste d'enregistrement (71) du support d'enregistrement (70), la lumière dont la répartition d'intensité est mise sous une forme circulaire par le moyen de mise en forme de répartition d'intensité (40).

**5.** Dispositif de tête optique selon l'une quelconque des revendications précédentes, dans lequel lesdites deux zones de diffraction sont pourvues de réseaux respectifs de pas différents ; et dans lequel le moyen photodétecteur comprend une première partie photodétectrice (61) et une deuxième partie photodétectrice (62, 63) formées par une première ligne de séparation (64), qui s'étend dans une direction orthogonale à la direction de référence (y), la deuxième partie photodétectrice (62, 63) comprenant une troisième partie photodétectrice (62) et une quatrième partie photodétectrice (63), formées par une deuxième ligne de séparation (65), qui s'étend à partir d'un point médian de la première ligne de séparation (64) dans une direction sensiblement parallèle à la direction de référence (y),

ce par quoi, lorsque qu'une partie de la lumière réfléchie, ayant été diffractée par ladite zone de diffraction (23) du moyen de diffraction (20), est amenée à converger sur la deuxième ligne de séparation (65) du moyen photodétecteur (60), une valeur du signal d'erreur de focalisation peut devenir zéro, tandis que l'autre partie de la lumière réfléchie, diffractée par l'autre zone de diffraction (22), est amenée à converger sur un centre sensible de la première partie photodétectrice (61), et

lorsqu'un signal de détection, émis par la première partie photodétectrice (61) est représenté par Sa ; un signal de détection, émis par la troisième partie photodétectrice (62) est représenté par Sb ; et un signal de détection, émis par la quatrième partie photodétectrice (63), est représenté pas Sc, on obtient alors un signal de reproduction d'informations, enregistrées sur le support d'enregistrement (70), par un calcul de Sa + Sb + Sc ; le signal d'erreur de focalisation est obtenu par un calcul de Sc - Sb ; et un signal d'erreur de piste est obtenu par un calcul de Sa - (Sb + Sc).

**6.** Dispositif de tête optique selon l'une quelconque des revendications 1 à 4, dans lequel lesdites deux zones de diffraction (22, 23) dudit moyen de diffraction (20) sont disposées de telle manière que les positions respectives ($O_{10}$, $O_{20}$) de convergence, sur le moyen photodétecteur (60), des parties respectives de la lumière réfléchie, qui ont été diffractées par lesdites deux zones de diffraction (22, 23) respectives, soient distantes l'une de l'autre dans ladite direction de référence.

# FIG.1

# FIG . 2

# FIG. 3

# FIG. 4

# FIG. 5

# FIG. 6

FIG. 7

# FIG. 8

# FIG. 9

## FIG.10

## FIG.11

FIG. 12

RADIAL
DIRECTION

## FIG.13

## FIG.14